(19) Europäisches Patentamt
European Patent Office
Office européen des brevets

(11) **EP 1 995 693 A1**

(12) **DEMANDE DE BREVET EUROPEEN**

(43) Date de publication:
**26.11.2008 Bulletin 2008/48**

(51) Int Cl.:
***G06T 7/20*** *(2006.01)*

(21) Numéro de dépôt: **08300209.7**

(22) Date de dépôt: **20.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **22.05.2007 FR 0755181**

(71) Demandeur: **Commissariat A L'Energie Atomique - CEA**
**75015 Paris (FR)**

(72) Inventeur: **Verdant, Arnaud**
**38110 La Tour du Pain (FR)**

(74) Mandataire: **Palix, Stéphane et al**
**Cabinet Laurent & Charras**
**"Le Contemporain"**
**50, Chemin de la Bruyère**
**69574 Dardilly Cédex (FR)**

(54) **Procédé de détection d'un objet en mouvement dans un flux d'images**

(57) L'invention concerne un procédé de détection d'un objet en mouvement dans un flux d'images prises à des instants successifs, du type comportant, pour chaque zone d'un ensemble prédéterminé de zones d'au moins un pixel de l'image constitutives d'une image courante, une étape (10) consistant à déterminer si cette zone appartient à l'objet en mouvement.

Selon l'invention, ce procédé comporte une étape de recherche (en 14), dans au moins une image précédente du flux et selon au moins une direction et un sens prédéterminés, d'une autre zone déterminée comme appartenant à un objet en mouvement, et une étape d'infirmation (en 20) du fait que ladite zone appartient à un objet en mouvement si la recherche est négative.

arbres

piéton

zone à variations de contraste
rapides et importantes

**Fig. 5**

EP 1 995 693 A1

**Description**

**DOMAINE DE L'INVENTION**

La présente invention concerne un procédé de détection d'un objet en mouvement dans un flux d'images prises à des instants successifs.

**ETAT ANTERIEUR DE LA TECHNIQUE**

Il est connu de l'état de la technique des procédés de détection d'un objet en mouvement dans un flux d'images se fondant sur la variation temporelle de la luminosité des pixels des images. Par exemple, pour une image courante, il est déterminé qu'un pixel de celle-ci appartient à un objet en mouvement lorsque la valeur de ce pixel a varié de manière significative depuis l'image immédiatement précédente dans le flux. Une image binaire est ainsi obtenue à partir de l'image courante, dans laquelle les pixels sont usuellement à la valeur « 1 » lorsqu'ils appartiennent à un objet en mouvement et à la valeur « 0 » sinon.

Ce type de détection ne tient donc pas compte des variations de la valeur des pixels voisins. Il apparaît un bruit relativement important dans l'image binaire en raison d'évènements parasites dans la scène observée, tels qu'un bruissement de feuillage ou une variation locale rapide et importante de contraste.

Pour remédier à cet inconvénient, il a été proposé des algorithmes de recherche de translations locales de mouvements au sein du flux d'images. Ces algorithmes font appel à des techniques dites « de flot optique ». Selon ces techniques, un vecteur des objets en déplacement est calculé au moyen d'une recherche itérative du déplacement le plus vraisemblable de valeurs de luminosité prédéfinies dans leurs voisinages respectifs, d'une image sur l'autre. On citera par exemple l'article « A block matching approach for movement estimation in a CMOS retina: principle and result » de D. Navarro et al., Proceedings of ESSCIRC, 2003, pages 615-619.

Toutefois ce type d'algorithmes est fortement itératif et demande donc des ressources et/ou du temps de calcul très importants. Il est ainsi difficile d'envisager de les mettre en oeuvre par une unité de calcul aux ressources limitées, comme c'est le cas par exemple d'un système embarqué dans un véhicule autonome.

**EXPOSE DE L'INVENTION**

L'invention a pour but de résoudre le problème susmentionné en proposant un procédé de détection d'un objet en mouvement qui réduit sensiblement le bruit parasite et qui ne nécessite pas pour cela une quantité de calculs importants.

A cet effet, l'invention a pour objet un procédé de détection d'un ou plusieurs objets en mouvement dans un flux d'images prise à des instants successifs, comprenant des étapes consistant à générer une première image binaire indiquant pour chaque zone d'au moins un pixel de l'image courante une première ou une seconde valeur selon respectivement qu'elle appartient ou non à un objet en mouvement.

Selon l'invention, le procédé comporte en outre des étapes consistant à :

■ rechercher, selon au moins un sens et une direction prédéterminés, pour chaque zone de la première image binaire présentant la première valeur s'il existe dans au moins une première image binaire produite lors d'une détection de mouvement précédente dans une image précédente du flux une zone présentant également la première valeur ; et
■ générer une seconde image binaire indiquant la première valeur uniquement pour les zones de la première image binaire pour lesquels la recherche précédente est positive et indiquant la seconde valeur sinon, les zones de la seconde image binaire présentant la première valeur définissant les objets en mouvement identifiés dans l'image courante.

En d'autres termes, l'invention a pour objet un procédé de détection d'un objet en mouvement dans un flux d'images prises à des instants successifs, du type comportant, pour chaque zone d'un ensemble prédéterminé de zones d'au moins un pixel de l'image constitutives d'une image courante, une étape consistant à déterminer si cette zone appartient à l'objet en mouvement, ce procédé comportant des étapes :

■ de recherche, dans au moins une image précédente du flux et selon au moins une direction et un sens prédéterminés, d'une autre zone déterminée comme appartenant à un objet en mouvement ; et
■ d'infirmation du fait que ladite zone appartient à un objet en mouvement si la recherche est négative.

Ainsi, une zone est effectivement déterminée comme appartenant à un objet en mouvement lorsqu'elle correspond en outre à une translation locale d'une zone de même nature d'une image précédente à l'image courante.

De plus comme on peut le constater, la recherche de ces translations locales ne nécessite pas une grande quantité de calculs puisqu'elle se limite à détecter la présence de zones d'intérêt dans les images précédentes. Aucun calcul itératif n'est donc mis en oeuvre.

Selon des modes de réalisation particuliers de l'invention, le procédé comporte une ou plusieurs des caractéristiques suivantes :

- l'étape de génération de la première image binaire comprend les étapes consistant à :

   ■ déterminer pour chaque zone de l'image courante si la variation entre les valeurs relevées pour cette zone pour l'image courante et une image précédente du flux est supérieure à un seuil prédéterminé ; et
   ■ générer la première image binaire en indiquant pour chaque zone la première ou la seconde valeur selon respectivement que la détermination précédente est positive ou négative ;

- la durée séparant l'image courante de la ou chaque image précédente est sélectionnée en fonction d'une vitesse estimée de l'objet en mouvement ;
- la ou chaque direction est sélectionnée en fonction d'une direction de déplacement estimée de l'objet en mouvement ;
- la recherche est effectuée dans un voisinage de ladite zone ;
- la recherche est effectuée sur trois zones voisines selon la ou chaque direction de recherche ;
- un sens et une direction de recherche sont définis par un vecteur prédéterminé et les zones recherchées selon ce sens et cette direction de ladite au moins une première image binaire produite lors d'une détection de mouvement précédente dans une image précédente du flux,,sont déterminées en fonction d'au moins un multiple entier dudit vecteur ;
- la ou chaque image binaire produite lors d'une détection de mouvement précédente dans une image précédente du flux utilisée pour la recherche est déterminée en fonction d'un multiple entier d'au moins un pas temporel prédéterminé ; et
- les directions de recherche sont angulairement équiréparties.

## BREVE DESCRIPTION DES FIGURES

L'invention sera mieux comprise à la lecture de la description qui va suivre, donnée uniquement à titre d'exemple, et faite en relation avec les dessins annexés dans lesquels :

- la figure 1 est un organigramme d'un procédé selon l'invention ;
- la figure 2 est une matrice illustrant la recherche de translation dans un flux d'images ;
- les figures 3 et 4 sont des exemples de détections d'objets en mouvement sans et avec utilisation du procédé de l'invention respectivement, la détection étant réalisée à l'échelle d'un pixel ; et
- les figures 5 et 6 sont des exemples de détections d'objets en mouvement sans et avec utilisation du procédé de l'invention respectivement, la détection étant réalisée à l'échelle d'un macropixel.

## DESCRIPTION DETAILLEE DE L'INVENTION

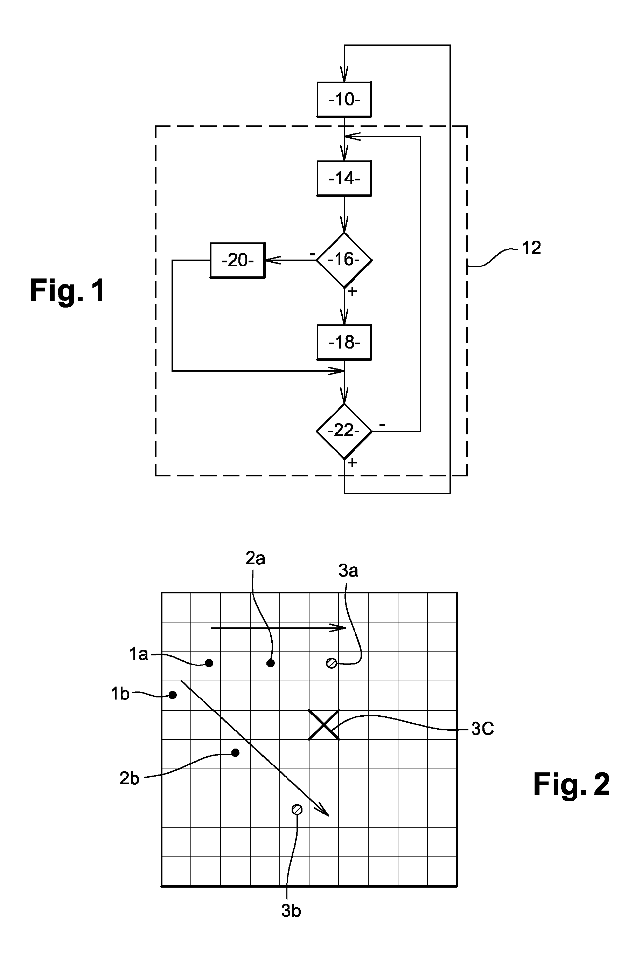

Un procédé selon l'invention de détection d'objets en mouvement dans un flux d'images en provenance d'un capteur d'image va maintenant être décrit en relation avec la figure 1.

Le capteur d'image produit périodiquement une image d'une scène observée. Cette image est lue et mémorisée par une unité de traitement d'informations qui met en oeuvre ledit procédé de détection.

Le procédé s'applique dans l'exemple ci-dessous à la détection d'objets en mouvement à l'échelle d'un pixel de l'image.

Dans une première étape 10, chaque pixel de l'image courante est analysé pour savoir s'il appartient à un objet en mouvement. Par exemple, la valeur courante du pixel, par exemple sa luminance, la valeur du canal rouge, du canal, bleu ou du canal vert par exemple, est comparée à celle de l'image immédiatement précédente.

Si une variation de la valeur du pixel est supérieure à une valeur de seuil prédéterminée, ce pixel est déterminé comme appartenant à un objet en mouvement. A l'issu de l'étape de l'étape 10, il est ainsi obtenu une image binaire de l'image courante, la valeur d'un pixel de l'image binaire étant égale à 1 lorsque le pixel est déterminé comme appartenant à un objet en mouvement et égale à 0 sinon.

En variante, la valeur courante du pixel est comparée à celle d'une image plus éloignée dans le temps que l'image immédiatement précédente afin de tenir compte d'une fréquence élevée de lecture du capteur d'image, classiquement de l'ordre de 50 à 60 Hz dans les systèmes de vision. Ainsi, le déplacement apparent de l'objet entre l'image courant et l'image éloignée dans le temps est plus grand et donc plus facilement détectable.

De même pour les mêmes raisons que celles évoquées ci-dessus, lorsque la fréquence de lecture du capteur d'image est élevée par rapport aux vitesses de déplacement des objets à détecter, il est avantageux de ne traiter qu'une image du flux sur N images, comme par exemple une image sur 3, afin d'économiser des ressources, sans que cela ne soit dommageable pour la qualité de la détection de objets en mouvement.

Bien entendu, tout algorithme de détection d'objets en mouvement peut être mis en oeuvre dans l'étape 10.

Le procédé se poursuit alors par une étape de confirmation/infirmation 12 de l'état des pixels déterminés comme appartenant à un objet en mouvement.

Cette étape de confirmation/infirmation 12 comporte une étape 14 dans laquelle un pixel de valeur « 1 » est recherché dans des images binaires précédemment générée à l'issu de l'étape 10. Dans la suite, on qualifiera ce pixel de «pixel d'analyse » pour des raisons de clarté.

Cette recherche est effectuée selon une ou plusieurs directions et sens de recherche prédéterminés. Par exemple, dans le cadre de la surveillance d'un trafic autoroutier par une caméra installée en bordure de chaussée, la direction et le sens du mouvement des véhicules dans le flux d'images est connue. Une recherche selon cette direction est alors privilégiée.

Si aucune information sur le mouvement des objets n'est connue a priori, une recherche est alors effectuée selon plusieurs directions différentes à partir du pixel d'analyse. Par exemple, huit directions de recherche angulairement équiréparties autour du pixel d'analyse sont sélectionnées.

De préférence, des informations sur la vitesse de déplacement des objets sont également utilisées pour le choix des images binaires précédentes utilisées pour la recherche.

Par exemple, pour un objet se déplaçant lentement par rapport à la fréquence de lecture du capteur d'image, il est avantageux de choisir des images binaires très éloignées dans le temps de l'image binaire courante afin de détecter de manière plus fiable une translation de cet objet dans l'image. En effet, en choisissant pour la détection de cet objet l'image binaire immédiatement précédente, il se peut que le déplacement de celui-ci ne soit pas suffisant pour être détecté. A contrario, s'il est cherché à détecter un objet se déplaçant rapidement, des images binaires précédentes proches dans le temps de l'image binaire courante sont choisies.

De préférence, la recherche se limite à un voisinage proche du pixel d'analyse, par exemple une recherche sur 3 pixels voisins selon la ou les directions de recherche. Ceci permet de minimiser une détermination à tord d'une translation locale d'un objet. Si, par exemple, la recherche s'effectuait sur tous les pixels selon une direction de recherche, un pixel de valeur « 1 » très éloigné du pixel d'analyse pourrait être considéré comme appartenant au même objet que le pixel d'analyse alors même qu'il appartient à un objet différent.

Par ailleurs, plus le nombre d'images binaires sélectionnées pour la recherche est élevé, plus le risque de ne par détecter une translation locale est réduit. Toutefois, afin que l'étape de recherche 14 ne nécessite pas d'importantes ressources en mémoire, il est privilégié un nombre de 3 images binaires précédentes. Ce nombre permet en effet un bon compromis entre la quantité de mémoire utilisée et la précision de l'étape de recherche.

Le procédé se poursuit alors par une étape 16 dans laquelle il est mis en oeuvre un test pour savoir si la recherche effectuée en 14 a révélé l'existence d'au moins un pixel à la valeur « 1 » dans les images binaires précédentes sélectionnées, selon la ou les directions de recherche.

Si le résultat de ce test est positif, l'état du pixel d'analyse selon lequel il appartient à un objet en mouvement est confirmé en 18 en laissant sa valeur à « 1 ».

Si le résultat de ce test est négatif, l'état du pixel d'analyse est infirmé en 20 et la valeur de celui-ci est réglée sur « 0 », signifiant donc qu'il n'appartient pas à un objet en mouvement.

Les étapes 18 et 20 se poursuivent alors par une étape de test 22 pour savoir si tous les pixels à « 1 » de l'image binaire courante issue de l'étape 10 ont été analysés. Si tel n'est pas le cas, l'étape 22 boucle sur l'étape 14 pour l'analyse de pixel suivant. Sinon, l'étape 22 boucle sur l'étape 10 pour la détection d'objets en mouvement dans l'image suivante.

En désignant la matrice binaire produite à l'étape 10 « M(x, y, t) », où x et y sont les coordonnées des pixels, et t l'instant courant, une variation temporelle d'un pixel de l'image courante sera considérée comme pertinente si elle est précédée dans le temps de variations significatives dans des pixels voisins, selon un sens et une direction donnée. Une matrice binaire T(x, y, t), combinant la notion de détection temporelle locale d'un mouvement contenue dans la matrice binaire M(x, y, t) à la notion d'objet en translation, est ainsi obtenue à l'issue de l'étape 12.

Par exemple, en ne considérant qu'une direction de recherche sur deux images binaires précédentes, la matrice binaire T(x, y, t) est obtenue selon la relation logique:

$$T(x, y, t) = M(x, y, t) \text{ ET } M(x-\delta x, y-\delta y, t-\delta t) \text{ ET } M(x-2\delta x, y-2\delta y, t-2\delta t) \quad (1)$$

où δx, δy sont des paramètres positifs ou négatifs définissant le sens et la direction de recherche, et δt est un paramètre positif définissant les images binaires précédentes sélectionnées pour la recherche de translation. De manière plus générale, les zones recherchées sont ainsi déterminées en fonction de multiples entiers du vecteur de recherche (δx, δy), et les images binaires précédentes sont déterminées par des multiples entiers du pas temporel δt.

Ce principe de combinaison entre variation temporelle locale et de translation est illustré à la figure 2. Sur cette figure, les pixels 3a, 3b et 3c ont été détectés comme appartenant à un objet en mouvement en raison de la variation de leur valeur. Des variations temporelles locales ont donc été détectées. En faisant une recherche dans le sens d'une translation ouest/est dans des images binaires précédentes, il a été détecté les pixels 1a et 2a considérés lors de recherche précédente, comme appartenant également à un objet en mouvement. Une translation dans le sens Ouest/Est est donc détectée et le fait que le pixel 3a appartienne à un objet en mouvement est donc confirmé. D'une manière analogue, une recherche dans le sens nord ouest/sud est effectuée pour le pixel 3b. La détection des pixels 1b et 2b traduit une translation dans ce sens et permet ainsi de confirmer le fait que le pixel 3b appartient à un objet en mouvement.

Par contre, pour le pixel 3c, ni recherche dans le sens ouest/est ni recherche dans le sens nord ouest/sud est ne révèle la présence de pixel. Le fait que le pixel 3c soit considéré comme appartenant à un objet en mouvement à l'issue de l'état 10 est infirmé. Sa valeur bascule donc de la valeur « 1 » à la valeur « 0 ».

Les éléments de la matrice M(x, y, t) considérés comme pertinent sont donc maintenus dans l'image binaire obtenue T(x, y, t) à « 1 ». Les éléments filtrés passent quant à eux à « 0 ».

Les paramètres δx, δy et δt sont réglables de manière à sélectionner une classe d'objet de taille et de vitesse donnée. Les paramètres δx et δy sont avantageusement réglés proportionnellement à la taille de l'objet. Les éléments de taille inférieure à la grille définie par les pas δx et δy seront alors filtrés. De même, le paramètre δt est réglé proportionnellement à la vitesse de l'objet à détecter. Les éléments de vitesse inférieure à la discrétisation temporelle définie par le paramètre δt seront donc filtrés.

La relation de filtrage (1) se restreint à une direction de recherche. Cette relation est généralisable à plusieurs directions de recherche, de manière à filtrer selon plusieurs directions et sens, ou même pour définir une seconde grille de filtrage relative à une deuxième taille d'objet à détecter. Par exemple, la matrice T(x, y, t) est obtenue selon la relation logique:

$$T(x, y, t) = (M(x, y, t) \text{ ET } M(x-\delta x1, y-\delta y1, t-\delta t) \text{ ET } M(x-2\delta x1, y-2\delta y1, t-2\delta t)) \text{ OU}$$
$$(M(x, y, t) \text{ ET } M(x-\delta x2, y-\delta y2, t-\delta t) \text{ ET } M(x-2\delta x1, y-2\delta y1, t-2\delta t)) \quad (2)$$

où δx1, δy1, δx2 et δy2 sont des paramètres positifs ou négatifs définissant le sens et la direction de recherche. De manière plus générale, les zones recherchées sont ainsi déterminées en fonction de multiples entier des vecteurs de recherche (δx1, δy1) et (δx2, δy2).

De même, en combinaison ou non de la généralisation à plusieurs directions et grilles, le principe de filtrage peut être étendu temporellement de manière à sélectionner des objets de vitesses différentes. Par exemple, la matrice T(x, y, t) est obtenue selon la relation logique:

$$T(x, y, t) = (M(x, y, t) \text{ ET } M(x-\delta x, y-\delta y, t-\delta t1) \text{ ET } M(x-2\delta x, y-2\delta y, t-2\delta t1)) \text{ OU}$$
$$(M(x, y, t) \text{ ET } M(x-\delta x, y-\delta y, t-\delta t2) \text{ ET } M(x-2\delta x, y-2\delta y, t-2\delta t2)) \quad (3)$$

où δt1 et δt2 sont des paramètres positifs définissant les images binaires précédentes sélectionnées pour la recherche de translation. De manière plus générale, les images binaires précédentes sont déterminées selon des multiples entiers des pas temporels δt1 et δt2.

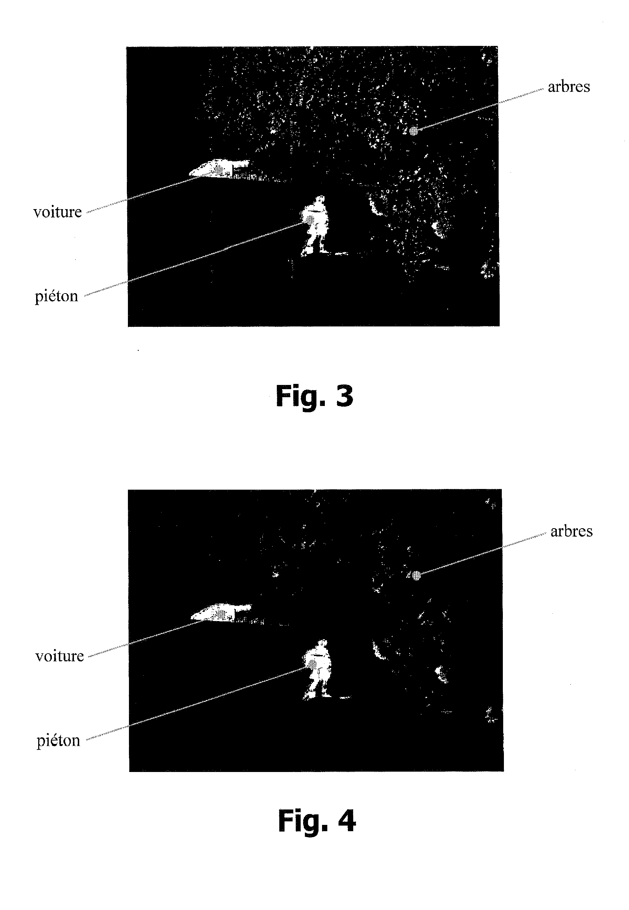

La figure 3 est un exemple d'image binaire obtenue à la suite de l'étape 10. Cette image provient de la capture d'une scène comportant un piéton et d'une portion de voiture en mouvement. La scène comprend également des arbres dont le feuillage est agité par du vent, dans une portion en haut à gauche de l'image. Comme on peut le constater, le mouvement du feuillage a été détecté comme une multitude de petits objets en mouvement de sorte qu'un bruit important est présent dans la portion comportant les arbres.

La figure 4 est une image binaire obtenue à l'issu de l'étape de confirmation/infirmation 12 décrite ci-dessus. Comme on peut le constater, le bruit correspondant au feuillage des arbres a été sensiblement réduit.

Il a été décrit une détection d'objets en mouvement pour l'ensemble des pixels de l'image considérés individuellement.

Le procédé selon l'invention s'applique également à la détection d'objets en mouvement dans un flux d'images issu d'un capteur d'image lu dans un mode de « sous résolution » dans laquelle la détection se fait à l'échelle de macropixels.

Ce type de lecture consiste à :

A. découper le capteur d'image, en sous-ensembles identiques de pixels, ou macropixels ;

B. lire chacun des macropixels en basse résolution, c'est-à-dire lire une seule valeur commune pour tous les pixels constituant le macropixel, comme par exemple la moyenne des valeurs de ces pixels ou la valeur d'un pixel du macropixel ;

C. déterminer qu'un macropixel comprend un objet en mouvement lorsque la valeur de celui-ci varie de manière significative dans le temps; et

D. lire également en haute résolution les macropixels comprenant un objet en mouvement, c'est-à-dire lire tous les pixels de ces macropixels.

Ce mode mixte de lecture, à savoir une lecture en haute résolution des macropixels d'intérêt, et une lecture en basse résolution des autres, permet de diminuer sensiblement la quantité de données à traiter et donc de réduire la consommation d'énergie.

Comme on peut le constater, dans ce type de lecture les problèmes rencontrés lors de la détection d'objets en mouvement dans les macropixels sont analogues à ceux décrits précédemment.

Ainsi, il est possible d'appliquer à la détection d'objets en mouvement dans les macropixels une étape de confirmation/infirmation analogue à l'étape 12 décrite en relation avec la figure 1. Une telle étape est insérée entre les étapes C et D décrites ci-dessus.

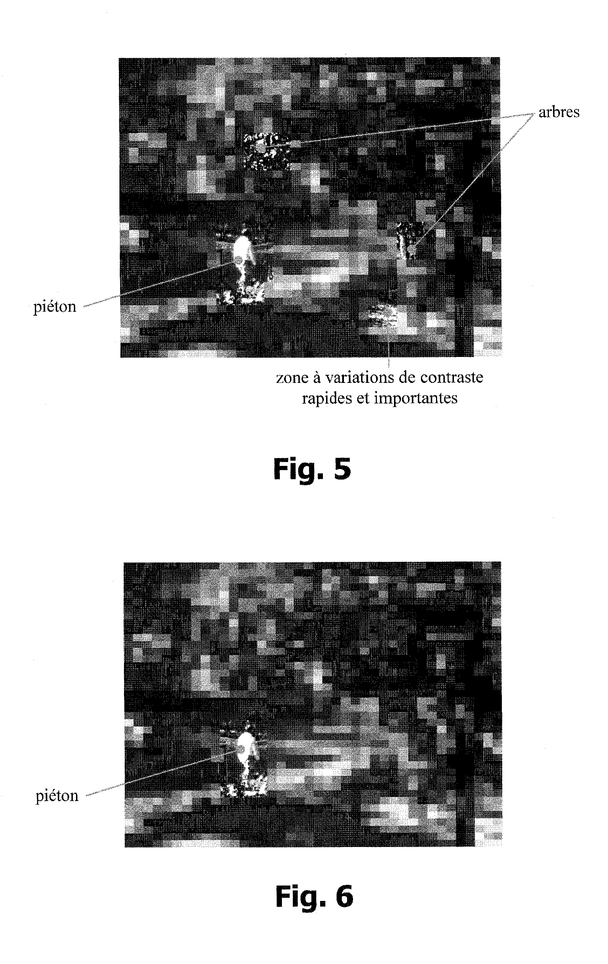

La figure 5 est un exemple d'image produite par un capteur lu en mode de sous-résolution en utilisant uniquement les étapes A, B, C et D. La pixellisation visible de cette image correspond aux macropixels.

Cette image provient par ailleurs de la capture d'une scène comportant un piéton en mouvement et des arbres dont le feuillage est agité par du vent. De plus, les conditions climatiques de la scène sont telles que des variations rapides de contraste ont lieu.

On constate ainsi que des macropixels dans une zone du feuillage et dans une zone à variation temporelle rapide et importante de contraste ont été déterminés comme comportant un objet en mouvement. En effet, ces macropixels apparaissent en haute résolution.

La figure 6 est une image de la même scène mais en utilisant en outre l'étape d'information/confirmation. Comme on peut le constater, les zones de feuillage et de contraste rapide mentionnées précédemment ont été infirmées.

De préférence, un algorithme de détection d'objet en mouvement dans des macropixels est du type de celui décrit dans le document «Adaptative multiresolution for low power cmos image censor » de Arnaud Verdant et al. », Image Processing, ICIP 2007, IEEE international conference on, vol. 5, pages 185-188, ISBN: 978-1-4244-1437-6 incorporé ici par référence.


**Revendications**

1. Procédé de détection d'un ou plusieurs objets en mouvement dans un flux d'images prises à des instants successifs, comprenant des étapes consistant à :

generer (en 10) une première image binaire indiquant pour chaque zone d'au moins un pixel de l'image courante une première ou une seconde valeur selon respectivement qu'elle appartient ou non à un objet en mouvement,

**caractérisé en ce qu'**il comporte en outre des étapes consistant à :

■ rechercher (en 14), selon au moins un sens et une direction prédéterminés, pour chaque zone de la première image binaire présentant la première valeur s'il existe dans au moins une première image binaire produite lors d'une détection de mouvement précédente dans une image précédente du flux une zone présentant également la première valeur ; et
■ générer (en 18) une seconde image binaire indiquant la première valeur uniquement pour les zones de la première image binaire pour lesquelles la recherche précédente est positive et indiquant la seconde valeur sinon, les zones de la seconde image binaire présentant la première valeur définissant les objets en mouvement identifiés dans l'image courante.

**2.** Procédé selon la revendication 1, *caractérisé* **en ce que** l'étape de génération de la première image binaire comprend les étapes consistant à :

■ déterminer (en 10) pour chaque zone de l'image courante si la variation entre les valeurs relevées pour cette zone pour l'image courante et une image précédente du flux est supérieure à un seuil prédéterminé ; et
■ générer la première image binaire en indiquant pour chaque zone la première ou la seconde valeur selon respectivement que la détermination précédente est positive ou négative.

**3.** Procédé selon la revendication 1 ou 2, *caractérisé* **en ce que** la durée séparant l'image courante de la ou chaque image précédente est sélectionnée en fonction d'une vitesse estimée de l'objet en mouvement.

**4.** Procédé selon la revendication 1 ou 2, *caractérisé* **en ce que** la ou chaque direction est sélectionnée en fonction d'une direction de déplacement estimée de l'objet en mouvement.

**5.** Procédé selon l'une quelconque des revendications précédentes, *caractérisé* **en ce que** la recherche est effectuée dans un voisinage de ladite zone.

**6.** Procédé selon la revendication 4, *caractérisé* **en ce que** la recherche est effectuée sur trois zones voisines selon la ou chaque direction de recherche.

**7.** Procédé selon la revendication 4, *caractérisé* **en ce qu'**un sens et une direction de recherche sont définis par un vecteur prédéterminé et **en ce que** les zones recherchées selon ce sens et cete direction dans ladite au moins une première image binaire produite lors d'une détection de mouvement précédente dans une image précédente du flux, sont déterminées en fonction d'au moins un multiple entier dudit vecteur.

**8.** Procédé selon l'une quelconque des revendications précédentes, *caractérisé* **en ce que** la ou chaque image binaire produite lors d'une détection de mouvement précédente dans une image précédente du flux utilisée pour la recherche est déterminée en fonction d'un multiple entier d'au moins un pas temporel prédéterminé.

**9.** Procédé selon l'une quelconque des revendications précédentes, *caractérisé* **en ce que** les directions de recherche sont angulairement équiréparties.

**Fig. 1**

```
        ┌──────┐
        │ -10- │
        └──────┘

        ┌──────┐
        │ -14- │
        └──────┘

┌──────┐  -  ◇
│ -20- │◄─── -16-
└──────┘     ◇
              +

        ┌──────┐
        │ -18- │
        └──────┘

             ◇
            -22-  -
             ◇
              +
```

12

**Fig. 2**

2a   3a

1a

1b

2b

3C

3b

arbres

voiture

piéton

**Fig. 3**

arbres

voiture

piéton

**Fig. 4**

arbres

piéton

zone à variations de contraste
rapides et importantes

**Fig. 5**

piéton

**Fig. 6**

**RAPPORT DE RECHERCHE EUROPEENNE**

Europäisches Patentamt
European Patent Office
Office européen des brevets

Numéro de la demande

EP 08 30 0209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHUANG GU ET AL: "Semantic video object tracking using region-based classification" IMAGE PROCESSING, 1998. ICIP 98. PROCEEDINGS. 1998 INTERNATIONAL CONFE RENCE ON CHICAGO, IL, USA 4-7 OCT. 1998, LOS ALAMITOS, CA, USA,IEEE COMPUT. SOC, US, vol. 3, 4 octobre 1998 (1998-10-04), pages 643-647, XP010586916 ISBN: 978-0-8186-8821-8 Sections 1,4,5,6 ----- | 1-9 | INV. G06T7/20 |
| X | GIUSTO D D ET AL: "A fast algorithm for video segmentation and object tracking" DIGITAL SIGNAL PROCESSING, 2002. DSP 2002. 2002 14TH INTERNATIONAL CON FERENCE ON SANTORINI, GREECE 1-3 JULY 2002, PISCATAWAY, NJ, USA,IEEE, US, vol. 2, 1 juillet 2002 (2002-07-01), pages 697-700, XP010599948 ISBN: 978-0-7803-7503-1 Sections 1,3,4 ----- | 1-9 | |
| A | US 5 355 326 A (FLORENT RAOUL [FR]) 11 octobre 1994 (1994-10-11) * le document en entier * ----- | 1-9 | |
| A | YEON-SUNG CHOI ET AL: "Salient Motion Information Detection Technique Using Weighted Subtraction Image and Motion Vector" HYBRID INFORMATION TECHNOLOGY, 2006. ICHIT '06. VOL1. INTERNATIONAL CONFERENCE ON, IEEE, PI, novembre 2006 (2006-11), pages 263-269, XP031022327 ISBN: 0-7695-2674-8 Sections 2.1, 2.2, 2.3, 2.4 ----- -/-- | 1-9 | |

DOMAINES TECHNIQUES RECHERCHES (IPC)

G06T

Le présent rapport a été établi pour toutes les revendications

| Lieu de la recherche | Date d'achèvement de la recherche | Examinateur |
|---|---|---|
| La Haye | 17 octobre 2008 | Almeida Garcia, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 1 995 693 A1**

**Europäisches Patentamt**
**European Patent Office**
**Office européen des brevets**

# RAPPORT DE RECHERCHE EUROPEENNE

Numéro de la demande

EP 08 30 0209

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2005/162515 A1 (VENETIANER PETER L [US] ET AL) 28 juillet 2005 (2005-07-28) * abrégé * * alinéas [0113] - [0117], [0144] - [0147]; figure 5 * | 1-9 | |
| A | EP 0 961 226 A (EASTMAN KODAK CO [US]) 1 décembre 1999 (1999-12-01) * alinéas [0004] - [0006]; revendication 1; figure 3 * | 1-9 | |
| A | WIKLUND J ET AL: "Image sequence analysis for object tracking" PROCEEDINGS OF SCANDINAVIAN CONFERENCE ON IMAGE ANALYSIS, XX, XX, vol. 2, 5 juin 1987 (1987-06-05), pages 641-648, XP008089902 Section 2.1 | 1-9 | |
| A | WIXSON L ET AL: "Detecting salient motion by accumulating directionally-consistent flow" COMPUTER VISION, 1999. THE PROCEEDINGS OF THE SEVENTH IEEE INTERNATIONAL CONFERENCE ON KERKYRA, GREECE 20-27 SEPT. 1999, LOS ALAMITOS, CA, USA,IEEE COMPUT. SOC, US, vol. 2, 20 septembre 1999 (1999-09-20), pages 797-804, XP010350486 ISBN: 0-7695-0164-8 * le document en entier * | 1-5 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 17 octobre 2008 | Almeida Garcia, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 30 0209

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-10-2008

| Document brevet cité au rapport de recherche | | Date de publication | Membre(s) de la famille de brevet(s) | | Date de publication |
|---|---|---|---|---|---|
| US 5355326 | A | 11-10-1994 | AUCUN | | |
| US 2005162515 | A1 | 28-07-2005 | AUCUN | | |
| EP 0961226 | A | 01-12-1999 | DE | 69918609 D1 | 19-08-2004 |
| | | | DE | 69918609 T2 | 28-07-2005 |
| | | | JP | 2000011183 A | 14-01-2000 |
| | | | US | 6163620 A | 19-12-2000 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- **D. NAVARRO et al.** A block matching approach for movement estimation in a CMOS retina: principle and result. *Proceedings of ESSCIRC,* 2003, 615-619

- **ARNAUD VERDANT et al.** Adaptative multiresolution for low power cmos image censor. *Image Processing, ICIP 2007, IEEE international conference on,* 2007, vol. 5, ISBN 978-1-4244-1437-6, 185-188